# EUROPÄISCHE PATENTSCHRIFT

(11) **EP 0 559 620 B1**
(45) Veröffentlichungstag und Bekanntmachung des Hinweises auf die Patenterteilung: **22.02.1995**
(21) Anmeldenummer: 93810152.4
(22) Anmeldetag: 01.03.1993
(51) Int. Cl.: A47J 31/40

(54) **Brühvorrichtung, insbesondere für eine Kaffeemaschine**
Brewing device, in particular for a coffee machine
Dispositif pour préparer des boissons, en particulier pour une machine à café

(30) Priorität: 02.03.1992 CH 639/92
(43) Veröffentlichungstag der Anmeldung: 08.09.1993
(73) Patentinhaber: JURA ELEKTROAPPARATE AG, CH-4626 Niederbuchsiten (CH)
(72) Erfinder: Torma, Mikael, CH-4612 Wangen b. Olten (CH); Ackermann, Anton, CH-4855 Wolfwil/SO (CH)
(74) Vertreter: Tschudi, Lorenz

(56) Entgegenhaltungen:
- EP-A- 0 154 206
- EP-A- 0 295 565
- EP-A- 0 486 433
- DE-A- 4 119 559
- FR-A- 2 424 010

## Beschreibung

Die vorliegende Erfindung bezieht sich auf eine Brühvorrichtung, insbesondere für eine Kaffeemaschine gemäss dem Oberbegriff des unabhängigen Patentanspruches 1 sowie auf eine Kaffeemaschine mit einer Brühvorrichtung.

Aus der EP-A-0 154 206 ist eine gattungsgemäße Vorrichtung zur Zubereitung von Heissgetränken, insbesondere von Kaffee vorbekannt, die den Nachteil aufweist, dass der Brühkammerraum zur Aufnahme des Getränkepulvers kein variables Volumen aufweist und sich diese Vorrichtung somit nicht zum optimalen Brühen von Kaffeeportionen mit einer variablen Kaffeepulvermenge eignet. Wenn beim Gegenstand dieser Druckschrift ein grösseres Brühvolumen gewählt würde, so müsste auch ein grösserer Exzenter gewählt werden und somit würde die Gesamtapparatur bezüglich Breite und Höhe grössere Dimensionen aufweisen. Aus der FR-A-2 424 010 ist eine Kaffeemaschine vorbekannt, bei welcher in Seitenplatten Nuten zur Führung von Zapfen einer verkipp- und verschiebbaren Brühkammereinrichtung vorgesehen sind. Diese Vorrichtung weist den Nachteil auf, dass sie eine grosse Bauhöhe erfordert. Aus der EP-A-0 295 565 ist eine Kaffeemaschine vorbekannt, bei welcher zur vertikalen axialen Verschiebung des Brühkolbens und zur Verschwenkung der Zylinder-Kolbeneinheit je ein Getriebemotor vorgesehen ist. Diese Vorrichtung weist den Nachteil auf, dass sie durch die Verwendung getrennter Motoren für die Axialbewegung des Kolbens und die Verschwenkbewegung der Zylinder-Kolbeneinheit kostenaufwendig, kompliziert und voluminös wird.

Es ist eine Aufgabe der vorliegenden Erfindung, eine Kaffeemaschine der eingangs erwähnten Art derart auszubilden, dass die Nachteile des Standes der Technik vermieden werden. Die Kaffeemaschine soll eine Brühvorrichtung enthalten, welche beim Brühvorgang entsprechend der vorgewählten Kaffeepulvermenge ein variables Brühkammervolumen ermöglicht, um bei jeder vorwählbaren Kaffeepulvermenge einen optimalen Brühvorgang zu ermöglichen. Im weiteren soll die Kaffeemaschine entsprechend im Vergleich zu bekannten Kaffeemaschinen eine reduzierte Bauhöhe aufweisen. Weiterhin soll der Antrieb für die Axialbewegung des Brühkolbens und für die Verschwenkbewegung des Brühzylinders der Brühvorrichtung derart erfolgen, dass keine Verkantung der Antriebsmittel auftreten kann. Dies wird erfindungsgemäss erzielt durch die Merkmale des kennzeichnenden Teils des unabhängigen Patentanspruches 1.

Die Kaffeemaschine mit einer erfindungsgemässen Brühvorrichtung ist vorzugsweise so ausgebildet, dass mit Mitteln zur Erfassung der Umdrehungen des ersten Antriebsmittels der Brühvorrichtung und damit zur Bestimmung der Position des Brühkolbens versehen ist. Im weiteren ist die Kaffeemaschine vorzugsweise so ausgebildet, dass sie eine Steuereinheit umfasst, welche die Mahlzeit des Mahlwerkes aufgrund von vorgewählten Parametern bestimmt. Das durch die Mittel zur Bestimmung der Position des Brühkolbens an die Steuereinheit abgegebene Signal dient zur Korrektur der Mahlzeit aufgrund beispielsweise eines Verschleisses des Mahlwerks.

Weitere bevorzugte Ausführungsformen ergeben sich aus den abhängigen Ansprüchen.

Im folgenden werden anhand der Zeichnung Ausführungsbeispiele der Erfindung sowie deren Verwendung näher beschrieben. Es zeigen
**Fig. 1** eine Seitenansicht der in die schematisch dargestellte Kaffeemaschine eingebauten Brühvorrichtung;
**Fig. 2** eine Seitenansicht der Brühvorrichtung mit entfernten seitlichen Abdeckplatten;
**Fig. 3** eine Seitenansicht der teilweise demontierten Brühvorrichtung;
**Fig. 4** eine perspektivische Ansicht, geschnitten, der einen seitlichen Führungs- und Halteplatte der Brühvorrichtung mit der Führung für den Brühkolben;
**Fig. 5** eine perspektivische Ansicht, geschnitten, der anderen seitlichen Führungs- und Halteplatte der Brühvorrichtung mit der Führung für den Brühkolben;
**Fig. 6** eine Vorderansicht der Brühvorrichtung;
**Fig. 7** einen Längsschnitt durch die Brühvorrichtung mit dem Brühzylinder in Einfüllposition;
**Fig. 8** eine Seitenansicht der Brühvorrichtung, teilweise geschnitten, mit dem Brühzylinder in Brühposition;
**Fig. 9** einen Längsschnitt durch die Brühvorrichtung mit dem Brühzylinder in Ausstossposition;
**Fig. 10** eine perspektivische Explosionsansicht des Brühzylinders mit Ausstosskolben und den Antriebsorganen für den Ausstosskolben;
**Fig. 11** eine Draufsicht auf einen seitlichen Führungsarm;
**Fig. 12** einen Schnitt gemäss Linie XII-XII der Fig. 11;
**Fig. 13** eine Draufsicht auf die Brühvorrichtung;
**Fig. 14** eine Seitenansicht, teilweise geschnitten, einer weiteren Ausführungsform der Brühvorrichtung;
**Fig. 15** eine Seitenansicht des unteren Bereichs der Brühvorrichtung gemäss Fig. 14;
**Fig. 16** ein Blockschaltbild einer Anordnung zur Steuerung der Kaffeepulvermenge und zur Überwachung des Brühkolbenhubes.

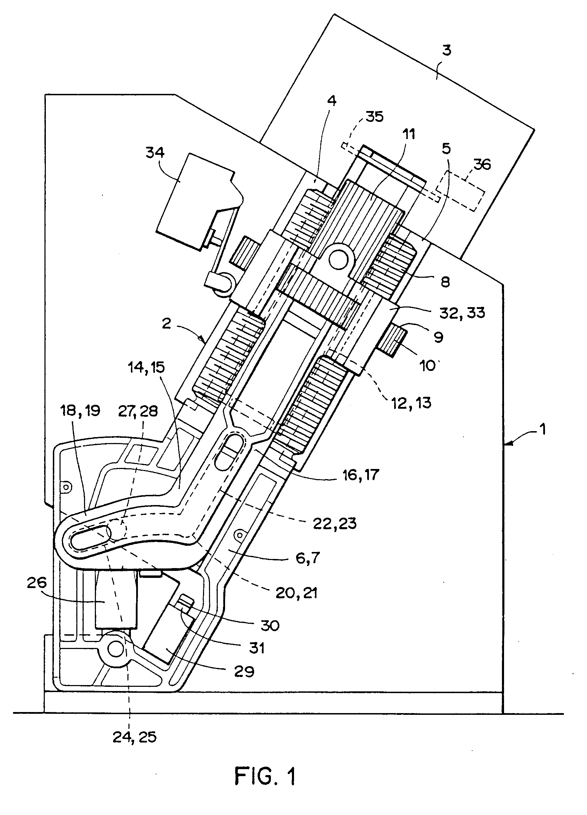

In Fig. 1 ist die, Teil einer schematisch dargestellten Kaffeemaschine 1 bildende Brühvorrichtung 2 in Seitenansicht mit abgenommenen Abdeckplatten dargestellt. Nebst der Brühvorrichtung 2 enthält die Kaffeemaschine in der Zeichnung nicht dargestellte Komponenten wie einen Frischwasservorratstank, ein Heizaggregat zur Erhitzung des Frischwassers, eine Förderpumpe zur Förderung des erhitzten Wassers zur Brühvorrichtung, ein Mahlwerk für die Kaffeebohnen, ein Motor zum Antrieb der Brühvorrichtung sowie Steuer- und Regeleinrichtungen. Der Motor zum Antrieb der Brühvorrichtung ist im schematisch dargestellten Teil 3 der Kaffeemaschine 1 enthalten. Die Brühvorrichtung 2 ist mit schematisch dargestellten Befestigungsmitteln 4 und 5 in der Kaffeemaschine 1 befestigt. Die Brühvorrichtung 2 umfasst seitliche Halte- und Führungsplatten 6 und 7, welche mit einer zylinderförmigen, mit einem Aussengewinde versehenen Führung 8 für die axiale Verschiebung des aus dieser Figur nicht ersichtlichen Brühkolbens verbunden sind. Auf der zylindrischen Führung 8 ist konzentrisch zu derselben, eine mit einem dem Aussengewinde der als Schraube wirkenden zylindrischen Führung 8 entsprechenden Innengewinde versehene Mutter 9 aufgesetzt. Die Mutter 9 ist an ihrem äusseren Umfang mit einer Verzahnung 10 versehen und übt zusätzlich die Funktion eines Zahrades aus. Die Mutter 9 wird durch ein zylinderförmiges Zahnrad 11 mit grossem Längen/Durchmesser-Verhältnis in Drehung versetzt und verschiebt sich dabei in axialer Richtung entlang der Führung 8 für den Brühkolben. Das Übersetzungsverhältnis beträgt im vorliegenden Falle 3,8 : 1. Das Zahnrad 11 wird durch einen im Teil 3 der Kaffeemaschine 1 angeordneten, nicht dargestellten Motor angetrieben. Die Führung 8 für den Brühkolben ist nur teilzylinderförmig ausgebildet, indem über ihre ganze Länge, einander gegenüberliegend, zwei parallel zur Achse verlaufende Ausnehmungen 12 und 13 vorgesehen sind. Parallel zu diesen beiden Ausnehmungen 12 und 13 sind ausserhalb der zylindrischen Führung 8 zwei einander gegenüberliegende Führungsarme 14 und 15 angeordnet. Die Führungsarme 14 und 15 werden durch nicht dargestellte Abdeckplatten geführt. Die Führungsarme 14 und 15 verlaufen in ihrem oberen Bereich 16 und 17 parallel zur Längsachse der Führung 8 und sind in ihrem unteren Bereich 18 und 19 in einem Winkel von etwa 130° gegenüber dem oberen Bereich abgewinkelt. Die Führungsarme 14 und 15 sind auf ihrer der zylindrischen Führung 8 zugekehrten Seite mit Nuten 20 und 21 versehen. Diese Nuten 20 und 21 sind entsprechend den Bereichen 16 und 17 respektive 18 und 19 der Führungsarme 14 und 15 ebenfalls abgewinkelt ausgebildet. Die oberen Teile 22 und 23 der Nuten 20 und 21 verlaufen geradlinig und parallel zur Achse der zylindrischen Führung 8, wobei die unteren Teile 24 und 25 der Nuten 20 und 21 eine gekrümmte Form aufweisen. Antriebsorgane 26 zur Bewegung des Ausstosskolbens im Brühzylinder sind mit seitlich abstehenden Zapfen 27 und 28 auf der einen Seite in den Nuten 20 und 21 der Führungsarme 14 und 15 geführt. Im unteren Bereich der seitlichen Führungs- und Halteplatten 6 und 7 ist ein, ein Ventil enthaltender Brühwasseranschluss 29 vorgesehen, der mit einem zylindrischen, mit einem Dichtungsring 30 versehenen Zapfen 31 in der Brühposition in einen entsprechenden unteren Anschluss am Brühzylinder eingreift. Am Schluss des Brühvorganges öffnet sich das Ventil und lässt das Restwasser ablaufen, wodurch eine saubere Brühkammer und ein trockener Kaffeekuchen erzielt werden können. Die Führungsarme 14 und 15 sind an ihren oberen Enden 32 und 33 mit dem aus Fig. 1 nicht ersichtlichen Brühkolben verbunden. Bei der Abwärtsbewegung der Mutter 9 auf der zylindrischen Führung 8 wird ein Schalter 34 betätigt, der die Kaffeepulver-Einfüllposition bestimmt, wenn keine elektronische Hubüberwachung des Brühkolbens vorhanden ist. Ein im oberen Bereich auf der Achse des Zahnrades 11 befestigtes, scheibenförmiges Mittel 35 sowie ein Sensor 36 bilden einen Inkrementalgeber zur Erfassung der Anzahl der ausgeführten Umdrehungen und Teildrehungen des Zahnrades 11 und somit der axialen Position des Brühkolbens. Es könnte auch z.B. ein mit dem Brühkolben verbundenes Linearpotentiometer verwendet werden.

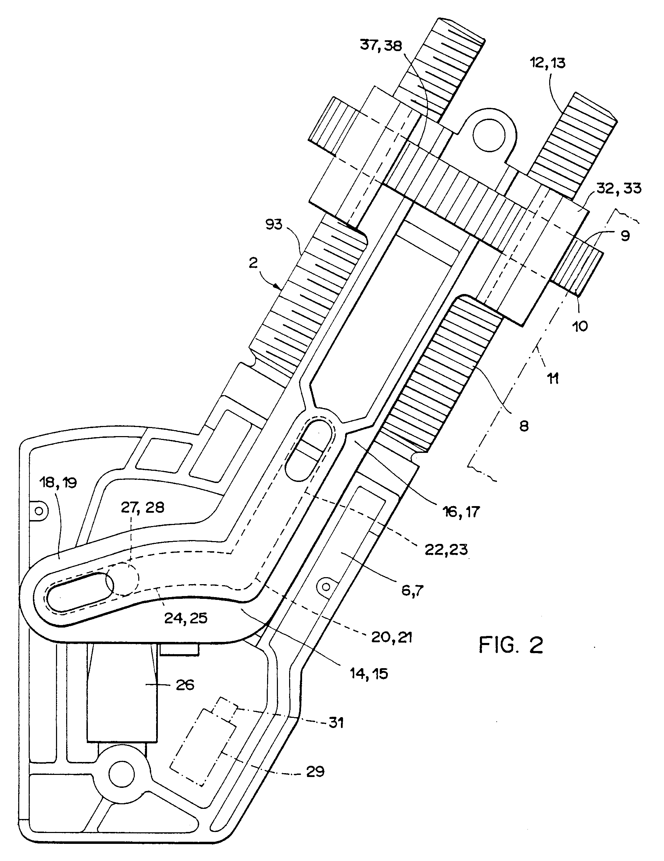

Aus Fig. 2 ist in grösserem Massstab eine Seitenansicht der Brühvorrichtung dargestellt. Die Führungsarme 14 und 15 befinden sich in der Kaffeepulver-Einfüllstellung. Die oberen Teile 32 und 33 der seitlichen Führungsarme 14 und 15 sind lösbar mit dem in der zylindrischen Führung 8 geführten, aus dieser Figur nicht ersichtlichen Brühkolben verbunden. Das Zahnrad 10 greift in Ausnehmungen 37 und 38 der oberen Teile 32 und 33 der Führungsarme 14 und 15 ein, wodurch die Führungsarme bei der Axialbewegung des Zahnrades 10 ebenfalls eine axiale Bewegung zusammen mit dem mit den Führungsarmen 14 und 15 verbundenen Brühzylinder ausführen.

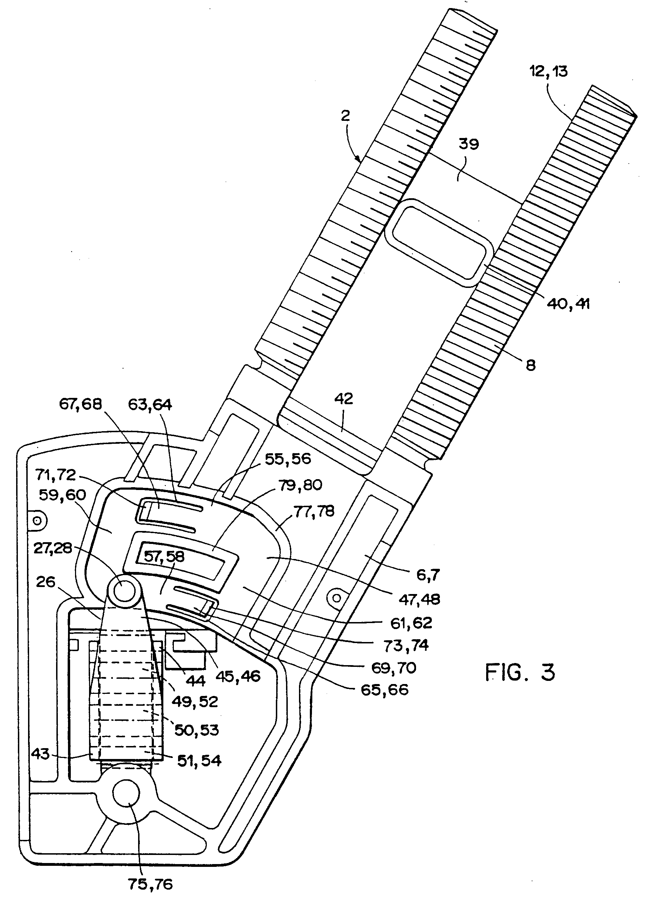

Aus Fig. 3 ist eine Seitenansicht der Brühvorrichtung ersichtlich, wobei die Führungsarme 14 und 15 und die Mutter 9 weggelassen sind. Der in der zylinderförmigen Führung 8 geführte Brühkolben 39 weist im Bereich der Ausnehmungen 12, 13 seitliche, rechteckförmige Ansätze 40, 41 auf, in welche entsprechende, im oberen Bereich an den Führungsarmen 14, 15 angebrachte Ansätze eingreifen. Der Brühkolben 39 ist in seinem unteren Bereich mit einem Dichtungsring 42 versehen. Das Antriebsorgan 26 zur Auf- und Abbewegung eines Ausstosskolbens im Brühzylinder umfasst senkrecht zu den seitlichen Führungs- und Halteplatten 6, 7 angeordnete Platten 43 und 44, die an ihrer Seite mit Seitenplatten 45 und 46 verbunden sind. Die Seitenplatten 45 und 46 sind an ihrem oberen Ende mit den Führungszapfen 27 und 28 verbunden, welche Führungszapfen auf ihrer nach aussen gekehrten Seite in die Nuten 20 und 21 der Führungsarme 14 und 15 und auf ihrer nach innen gekehrten Seite in parallelogrammförmige Führungsnuten 47 und 48 eingreifen, die in den Platten 6 und 7 angeordnet sind. In den Platten 43 und 44 sind in deren seitlichen Bereichen übereinander je drei Ritzel 49, 50, 51 respektive 52, 53 und 54 angeordnet. Die Drehachsen dieser Ritzel sind in den Platten 43 und 44 befestigt. Die Führungsnuten 47 und 48 weisen obere und untere längere Teile 55, 56 respektive 57, 58 und kürzere seitliche Teile 59, 60 respektive 61, 62 auf. Die oberen und unteren Teile 55, 56 respektive 57, 58 der Führungsnuten 47, 48 sind in ihren seitlichen Bereichen mit diagonal versetzten, U-förmigen Ausnehmungen 63, 64 respektive 65, 66 versehen. Durch diese Ausnehmungen werden in den oberen Teilen 55, 56 der Führungsnuten 57, 58 federnde Nutenteile 67, 68 und in den unteren Nutenteilen 57, 58 federnde Nutenteile 69, 70 gebildet. Diese federnden Nutenteile sind an ihren freien äusseren Enden mit in die Nuten 47, 48 hineinragenden Ansätzen 71, 72 respektive 73, 74 versehen. Bei der Aufrespektive Abbewegung der seitlichen Führungsarme 14, 15 und der dabei durch die Führungsnuten 20, 21 in den Führungsarmen 14, 15 bewirkten, zwangsläufigen Bewegung der Zapfen 27, 28 in den Führungsnuten 47, 48 wird durch die Ansätze 71, 72 respektive 73, 74 eine Zurückbewegung des Zapfens 27, 28 in den Führungsnuten 47, 48 verhindert. In den seitlichen Führungs- und Halteplatten 6, 7 sind in ihrem unteren Bereich Ausnehmungen 75, 76, zur Halterung einer sich durch die unteren Bereiche der Antriebsarme, des aus dieser Figur nicht ersichtlichen Brühzylinders erstreckenden Achse vorgesehen. Die Führungsnuten 47, 48 sind aussen durch Ansätze 77, 78 und innen durch Ansätze 79, 80 begrenzt.

Durch den beschriebenen Antrieb des Brühkolbens 39 durch die konzentrisch zu dessen Längsachse angeordnete Mutter 9 wird jegliche Verkantung der Antriebsmittel vermieden, was dann auftreten könnte, wenn ein axialer Antrieb seitlich des Brühkolbens oder des Brühzylinders angeordnet wäre.

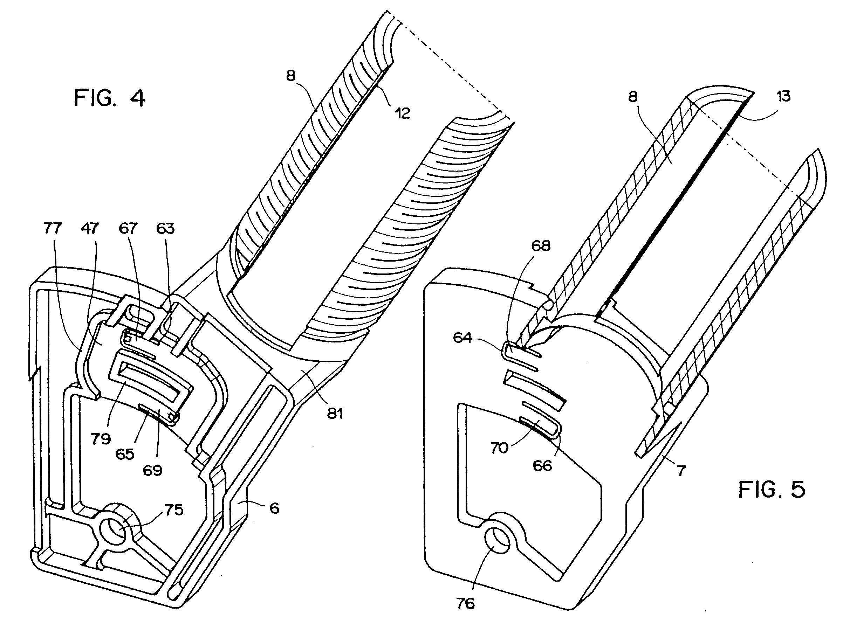

Aus den Fig. 4 und 5 sind die seitlichen Führungs- und Halteplatten 6, 7 mit der mit diesen verbundenen zylindrischen Führung 8 für den Brühkolben in perspektivischer Ansicht, entlang einer in der Achse verlaufenden Längsebene geschnitten, dargestellt. Die seitlichen Führungs- und Halteplatten 6, 7 sind in ihrem oberen Bereich durch einen zu denselben senkrecht angeordneten Verbindungsteil 81 verbunden.

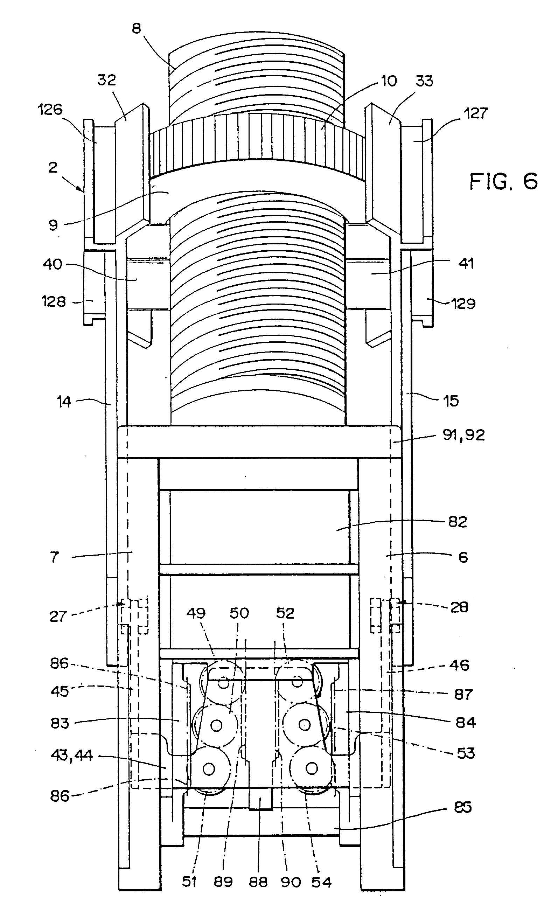

Aus Fig. 6 ist eine perspektivische Vorderansicht der Brühvorrichtung 2 dargestellt, wobei sich der Brühzylinder 82 wie bei den Figuren 1 bis 3 in der Kaffeepulver-Einfüllstellung befindet. Der Brühzylinder 82 ist mit an seinem unteren Ende nach unten abstehenden, sich gegenüberliegenden Antriebs- und Befestigungsarmen 83 und 84 verbunden. Diese auf der Innenseite mit Verzahnungen ausgebildeten Antriebsarme 83 und 84 sind auf einer in den Ausnehmungen 75 und 76 der seitlichen Führungs- und Halteplatten 6 und 7 befestigen Achse 85 drehbar gelagert. Die untersten zwischen den Platten 43 und 44 gelagerten Ritzel 51 und 54 kämmen die den Ritzeln gegenüberliegenden, als Zahnstangen ausgebildete Antriebsarme 83 und 84. Die obersten Ritzel 49 und 52 kämmen eine beidseitig mit Verzahnungen 89 und 90 versehene Doppelzahnstange 88, die als unterer Ansatz des Ausstosskolbens ausgebildet ist. Die oberen Teile 32 und 33 der Führungsarme 14, 15 sind mit seitlichen Führungen 126, 127, 128 und 129 versehen, die mit den Befestigungsmitteln 4 und 5 der Kaffeemaschine in Eingriff stehen. Die seitlichen Führungs- und Halteplatten 6 und 7 sind in ihrem oberen Bereich mit senkrecht zu denselben angeordneten Seitenstegen 91 und 92 verbunden.

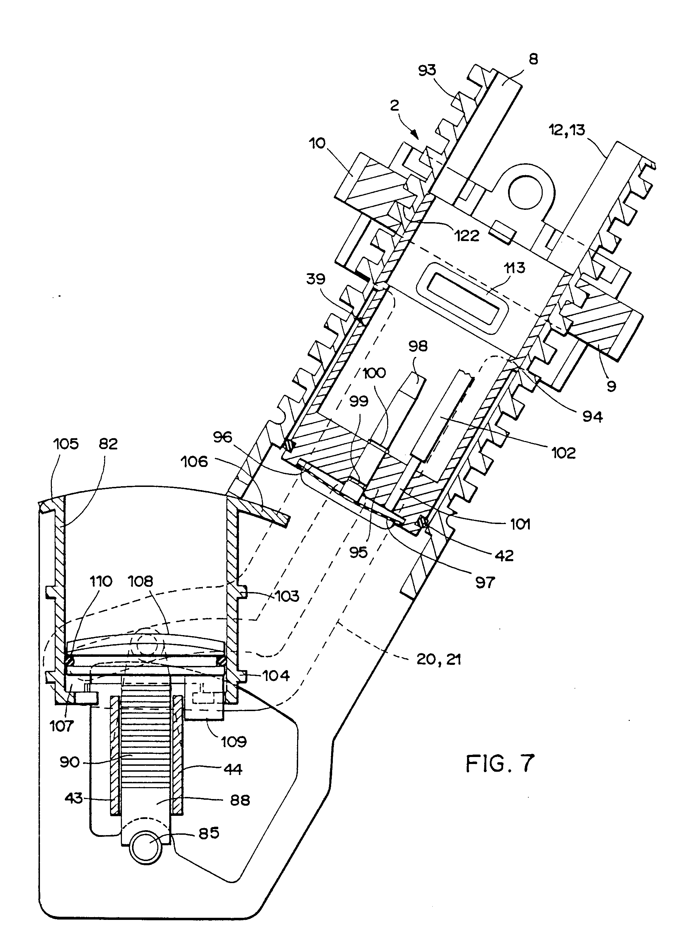

Aus Fig. 7 ist ein Längsschnitt durch die Brühvorrichtung 2 mit dem Brühzylinder 82 in der Kaffeepulver-Einfüllstellung ersichtlich. Aus dieser Figur ist das Gewinde 93 der zylindrischen Führung 8 für den Brühkolben 39 ersichtlich. Der Brühkolben 39 weist einen hohlzylinderförmigen Teil 94 und einen im unteren Bereich des selben angeordneten Frontteil 95 auf. An der Stirnfläche 96 des Frontteils 95 ist eine Siebplatte 97 befestigt. Die Siebplatte 97 kann mit einem Stift 98 aus dem Frontteil 95 zur Reinigung derselben herausgestossen werden. Der Stift 98 ist mit einem Dichtungsring 99 und einem Sicherungsring 100 versehen. Im Frontteil 95 des Brühkolbens 39 ist ein Rohr 101 mit einer Blende zum Abfluss für den Kaffee angeordnet. Das Rohr 101 ist mit einem Schlauch 102 verbunden. Der Brühzylinder 82 weist in seinem mittleren und unteren Bereich je eine nach aussen abstehende, kreisförmige Rippe 103 und 104 auf. An seinem oberen Ende ist der Brühzylinder 82 mit einer gebogenen, mit einer kreisförmigen Öffnung versehenen Abschlussplatte 105 versehen, die an ihrem dem Brühkolben 39 zugewandten Ende einen verlängerten Ansatz 106 aufweist. Im Brühzylinder 82 ist ein Ausstosskolben 107 auf- und abbewegbar, wobei dieser Ausstosskolben mit dem beidseitig mit Verzahnungen 89, 90 versehenen, nach unten vom Ausstosskolben 107 abstehenden Ansatz 88 verbunden ist. Der Ausstosskolben ist auf seiner oberen Seite mit einer bogenförmigen, teilweise als Rohr ausgebildeten Rippe 108 versehen, welche mit einem Brühwasseranschluss 109 verbunden ist. Der Ausstosskolben 107 ist mit einem Dichtungsring 110 versehen. Der Ausstosskolben 107 liegt noch nicht unten an den Auflageflächen 130, 131 des Brühzylinders 82 auf, damit er bei der Schwenkbewegung des Brühzylinders 82 nicht mit dem Brühwasseranschluss 29 der Kaffeemaschine kollidiert.

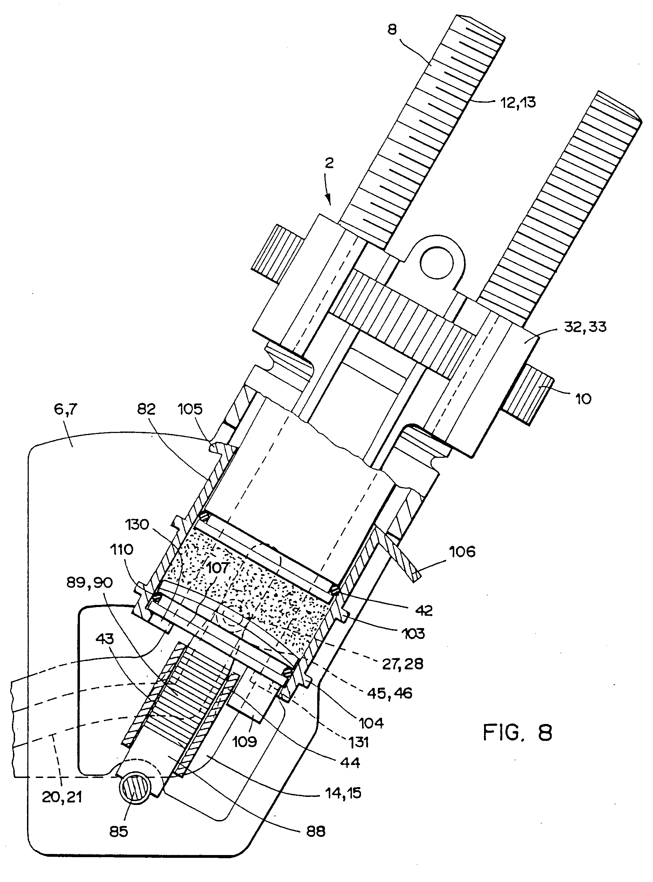

In Fig. 8 ist eine Seitenansicht der Brühvorrichtung 2, teilweise geschnitten, dargestellt. Der Brühzylinder 82 befindet sich dabei in der Brühstellung. Der untere Teil des Ausstosskolbens 107 liegt auf den Auflageflächen 130, 131 des Brühzylinders 82 auf, und der Brühwasseranschluss 109 des Ausstosskolbens gelangt in Wirkverbindung mit dem Brühwasseranschluss 29 der Kaffeemaschine.

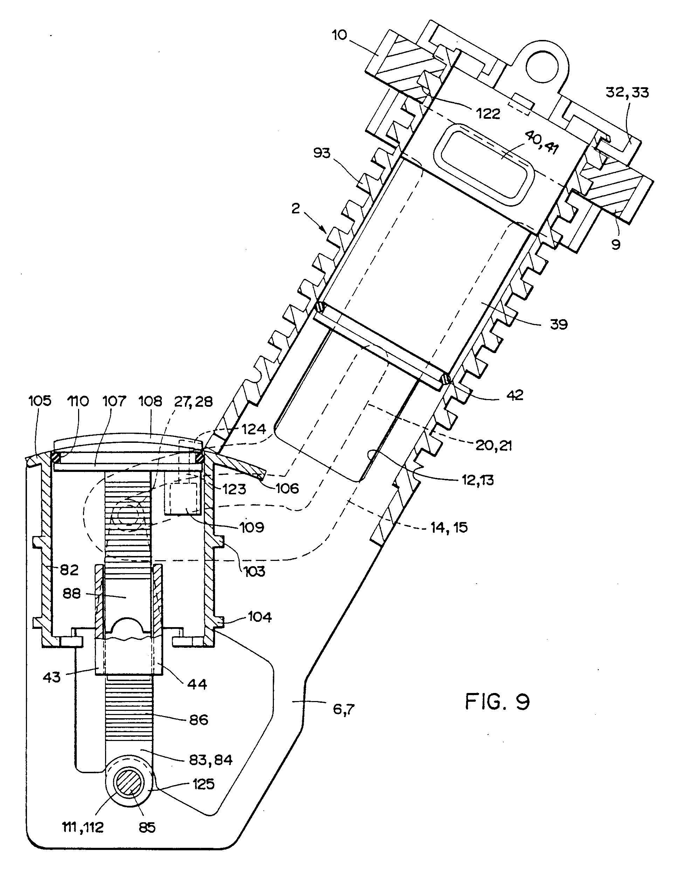

Aus Fig. 9 ist ein Längsschnitt durch die Brühvorrichtung 2 dargestellt, wobei sich der Brühzylinder 82 in der Ausstossstellung befindet. Beim Übergang von der Brühstellung gemäss Fig. 8 in die Ausstossstellung gemäss Fig. 9 wird der Kaffeepulverkuchen durch den Ausstosskolben 107 über den Ansatz 106 am Brühzylinder 82 in Richtung des Brühkolbens 39 von der Abschlussplatte 105 abgestreift und fällt in einen dafür bestimmten Behälter der Kaffeemaschine 1. Die Antriebsarme 83 und 84 des Brühzylinders 82 sind an ihren unteren Enden mit Öffnungen 111 und 112 versehen, durch welche die in den seitlichen Führungs- und Halteplatten 6 und 7 befestigte Achse 85 geführt ist. Zwischen den Armen 83 und 84 des Brühzylinders 82 ist im Bereich der Öffnungen 111 und 112 auf der Achse 85 eine Hülse 125 angeordnet. Der am Ausstosskolben 107 befestigte Brühwasseranschluss 109 ist mit einer Leitung 123 verbunden, die in eine Bohrung 124 in der Rippe 108 mündet. Das Brühwasser wird an der Wand des Brühzylinders 82 verteilt.

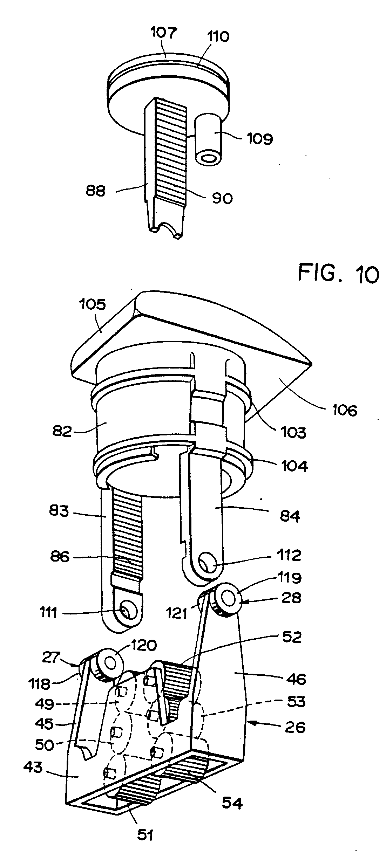

Aus Fig. 10 ist in perspektivischer Explosionsansicht der Brühzylinder 82, der Ausstosskolben 107 sowie das Antriebsorgan 26 zur Auf- und Abbewegung des Ausstosskolbens 107 im Brühzylinder 82 dargestellt. Die Zapfen 27 und 28 weisen nach aussen abstehende Teile 118 und 119 und nach innen abstehende Teile 120 und 121 auf.

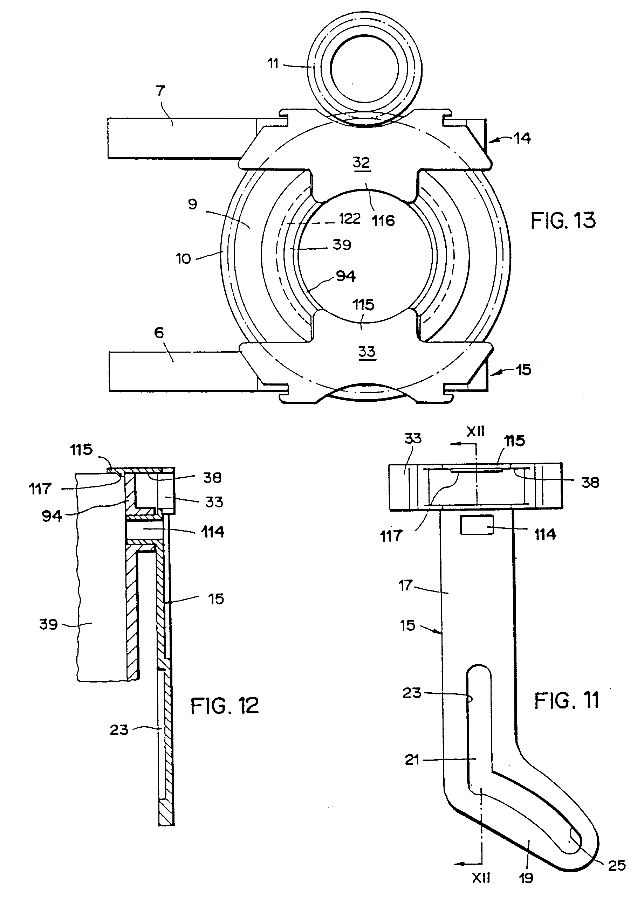

Aus Fig. 11 ist eine Draufsicht auf den Führungsarm 15 ersichtlich.

Aus Fig. 12 ist ein Schnitt durch den Führungsarm 15 gemäss Linie XII-XII ersichtlich. Aus dieser Figur ist insbesondere noch der im Querschnitt rechteckförmige Zapfen 114 ersichtlich (beim Führungsarm 14 entsprechend 113) der in den aus Fig. 3 ersichtlichen seitlichen, rechteckförmigen Ansatz 41 am Brühkolben 39 eingreift. Ein waagrechter Ansatz 115 am Führungsarm 15 mit einer nach unten abstehenden Rippe 117 bildet mit der hohlzylinderförmigen Wand 94 des Brühkolbens 39 einen Schnappverschluss.

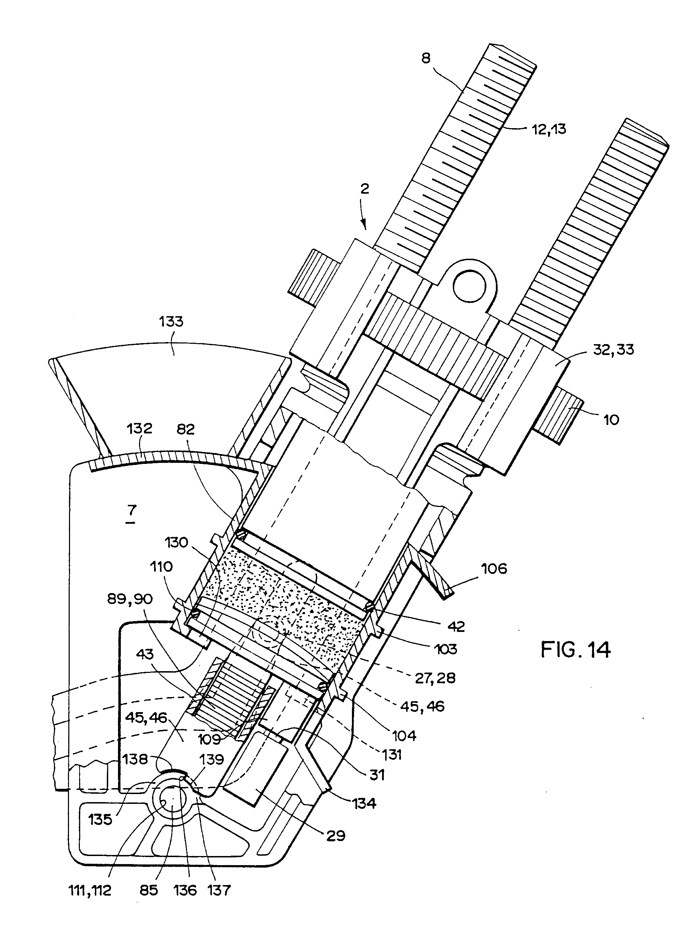

In Fig. 13 ist eine Draufsicht auf die Brühvorrichtung 2 dargestellt. Aus dieser Figur ist zusätzlich zu Fig. 12 noch der andere Führungsarm 14 ersichtlich, welcher ebenfalls mit einem oberen waagrechten Ansatz 116 versehen ist, der mit dem Brühkolben einen Schnappverschluss bildet.

In Fig. 14 ist eine Seitenansicht, teilweise geschnitten, einer Brühvorrichtung dargestellt, die in bezug auf die vorhergehend beschriebene Brühvorrichtung noch durch zusätzliche Teile ergänzt ist. Gleiche Teile werden wie bei der vorher beschriebenen Ausführungsform mit gleichen Bezugszeichen versehen. Die Abschlussplatte 105 ist bei dieser Ausführungsform nach links gemäss Fig. 14 durch einen Teil 132 verlängert. Oberhalb dieses Teils 132, d.h. oberhalb des Brühzylinders 82 in der Einfüllstellung befindet sich ein Trichter 133 für das gemahlene Kaffeepulver. Der Trichter 133 kann an der Brühvorrichtung selbst oder an Haltemitteln der Kaffeemaschine befestigt sein. In der in Fig. 14 gezeigten Brühstellung des Brühzylinders 82 wird der Trichter 133 durch den Verlängerungsteil 132 unten abgeschlossen. Diese Ausführungsform hat den Vorteil, dass, wenn mehrere Kaffeeportionen nacheinander gebrüht werden sollen, während des Brühvorganges bereits ein Mahlvorgang stattfinden kann, wobei eine Zeitersparnis erfolgt und mehrere Kaffeeportionen nacheinander in kürzerer Zeit hergestellt werden können. Der Brühzylinder 82 ist auf seiner dem Brühwasseranschluss 109 benachbarten Seite mit einer Abdeckplatte 134 versehen. Diese Abdeckplatte verhindert, dass beim Wegschieben des Kaffeekuchens entlang dem Ansatz 106 Kaffeetrester in den Brühwasseranschluss 29, 30 gelangt und diesen gegebenenfalls verstopfen könnte.

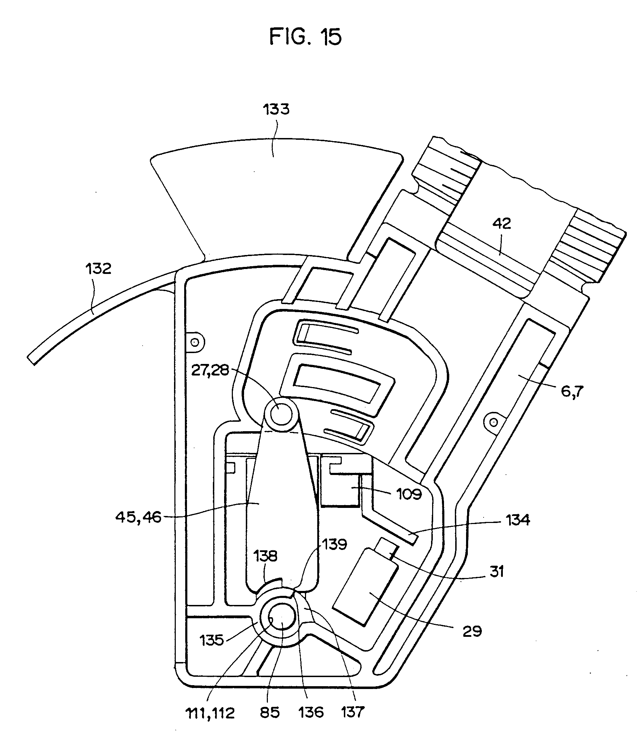

In Fig. 15 ist der untere Bereich der Brühvorrichtung gemäss Fig. 14 in Seitenansicht dargestellt, wobei sich der Brühzylinder 82 in der Ausstossposition befindet. Die Abdeckplatte 134 schützt den Brühwasseranschluss 29, 31 vor Verschmutzung. Die Ausnehmungen 111, 112 zur Lagerung der Achse 85 in den Seitenplatten 6, 7 sind von einem erhöhten Bereich 135 mit einem Absatz 136 und von einem vertieft ausgebildeten Bereich 137 umgeben. Die Enden der Seitenplatten 45, 46 des Antriebsorganes 26 weisen zwei gegeneinander versetzte Bereiche 138 und 139 auf. Dies hat zur Folge, dass bei der Verschwenkung des Brühzylinders von der Kaffeepulvereinfüllstellung in die Brühstellung das Antriebsorgan 26 und somit auch der Ausstosskolben 107 mit dem Brühwasseranschluss 109 etwas nach unten bewegt wird, was das Andocken des Brühwasseranschlusses 109 des Ausstosskolbens 107 an den Zapfen 31 des Brühwasseranschlusses 29 der Kaffeemaschine ermöglicht.

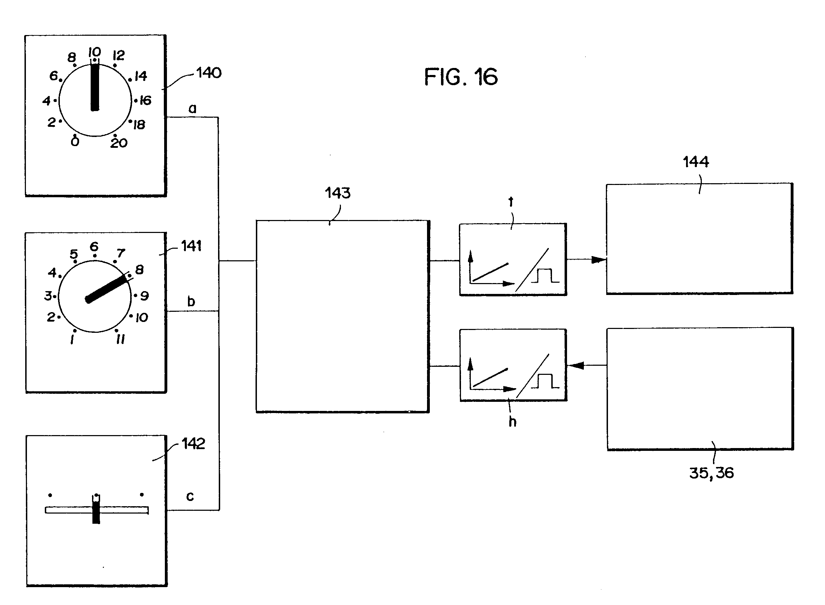

In Fig. 16 ist ein Blockschaltbild zur Steuerung der gemahlenen Kaffeepulvermenge und zur Überwachung des Brühkolbenhubes dargestellt. Sie umfasst eine Eingabeeinheit 140 zur Vorwählung des gewünschten Mahlgutvolumens, eine Eingabeeinheit 141 zur Einstellung des Mahlgrades und eine Eingabeeinheit 142 zur Vorwählung der Kaffeebohnenmischung, wobei das Verhältnis in der Mittelstellung des Schiebers 50 % / 50 % beträgt. Die Daten a, b und c der Eingabeeinheiten 140, 141 und 142 werden einer Steuereinheit 143 zugeführt. Aus den Daten a, b, c sowie einem Korrekturfaktor k wird die Zeit des Mahlvorganges berechnet, wobei das entsprechende Signal t dem Mahlwerk 144 zugeführt wird. Wenn das Mahlwerk 144 noch keinen Verschleiss aufweist, so entspricht die Mahlzeit einer gewissen Kaffeepulvermenge und damit auch einer Höhe d des durch den Brühkolben 39 zusammengepressten zylindrischen Kaffeekuchens im Brühzylinder 82. Durch den Inkrementalgeber 35, 36 oder ein anderes entsprechendes Überwachungsorgan, beispielsweise einen Schiebewiderstand, wird der Hub des Brühkolbens 39 überwacht. Weist das Mahlwerk einen Verschleiss auf so ist die durch die vorgegebene Mahlzeit gemahlene Kaffeepulvermenge kleiner geworden, was durch einen längeren Hub des Brühkolbens 39 elektronisch festgestellt werden kann. Das durch den Inkrementalgeber 35, 36 bestimmte Signal h, welches proportional zur effektiven Höhe des Kaffeekuchen ist, wird der Steuereinheit 143 zugeführt, wobei der entsprechende Korrekturfaktor k berechnet wird, so dass beim Herstellen der nächsten Kaffeeportion die Zeit des Mahlvorganges entsprechend den Parametern a, b und c und dem durch die Hubüberwachung festgestellten Verschleiss des Mahlwerks entsprechend korrigiert wird.

Bei einem weiteren, in der Zeichnung nicht dargestellten Ausführungsbeispiel der Antriebsorgane für den Ausstosskolben sind je zwei übereinander angeordnete Ritzel durch einen Zahnriemen verbunden, wobei die sich zugekehrten Seiten der Zahnriemen im Abstand angeordnet sind. Die äusseren Seiten der Zahnriemen kämmen die Zahnstangen 83 und 84 des Brühzylinders 82. Die Innenseiten der Zahnriemen kämmen die Doppelzahnstange 88 des Ausstosskolbens 107. Die Ritzel sind bei dieser Ausführungsform ebenfalls in den Platten 43 und 44 gehalten.

Im folgenden wird der Bewegungsablauf der Brühvorrichtung anhand der Fig. 1 bis 11 beschrieben. Wenn sich die durch das Zahnrad 11 angetriebene Mutter 9 auf der mit dem Aussengewinde 93 versehenen Führung 8 in der in Fig. 7 gezeigten Position befindet, so befindet sich der Brühzylinder 82 in der Kaffeepulver-Einfüllposition, in welcher die durch das Mahlwerk gemahlene Portion Kaffeepulver zwischen 6 und 15 Gramm in den Brühzylinder 82 eingefüllt wird. Die nach innen abstehenden, drehbaren Zapfenteile 120 und 121 der Zapfen 27 und 28 an den Seitenplatten 45 und 46 des Antriebsorganes 26 befinden sich dabei gemäss Fig. 3 in den unteren linken Ecken der parallelogrammförmigen Führungsnuten 47 und 48 in den seitlichen Führungs- und Halteplatten 6 und 7. Die nach aussen abstehenden, drehbaren Teile 118 und 119 der Zapfen 27 und 28 sind wie aus Fig. 2 ersichtlich im vorderen Bereich der unteren Teile 24 und 25 der Nuten 20 und 21 befindlich. Der Brühzylinder 39 befindet sich in der in Fig. 7 gezeigten Position. Bei der weiteren Abwärtsbewegung der Mutter 9 gleiten die Führungszapfen 27 und 28 entlang der unteren Teile 57 und 58 der Führungsnuten 47 und 48 nach rechts gemäss Fig. 3, wobei der Brühzylinder 82 in die in Fig. 8 gezeigte Brühstellung verschwenkt wird. Die nach innen abstehenden Teile 120 und 121 der Zapfen 27 und 28 befinden sich nun in den unteren rechten Ecken der parallelogrammförmigen Führungsnuten 47 und 48 gemäss Fig. 3. Die nach aussen abstehenden Teile 118 und 119 der Zapfen 27 und 28 befinden sich zwischen den oberen und unteren Teilen 22, 23 und 24, 25 der Führungsnuten 20, 21 der Führungsarme 14, 15. Bei der weiteren Abwärtsbewegung der Mutter 9 wird der Brühkolben 39 solange nach unten in den Brühzylinder 82 hineinverschoben, wie es der eingefüllten Kaffeepulvermenge entspricht. Bei Erreichen eines bestimmten Drehmoments, wenn das Kaffeepulver zusammengedrückt ist, wird die Abwärtsbewegung des Brühkolbens gestoppt und dieser wieder etwas nach oben gefahren, um Platz für das durch das Brühwasser aufgequellte Kaffeepulver zu schaffen. Die Brühposition des Brühkolbens wird durch den Inkrementalgeber 35, 36 und die nachfolgend noch beschriebene Steuereinheit überwacht. Diese Steuerung ermöglicht es, einen Verschleiss des Mahlwerks zu kompensieren. Das Mahlwerk wird zeitgesteuert entsprechend der gewünschten Kaffeepulvermenge und dem eventuellen Verschleiss betrieben. Der Brühkolben kann mit einer Genauigkeit von ca. 0,25mm in seine Brühposition verschoben werden. Das gebrühte Getränk wird durch das Rohr 101 und den Schlauch 102 dem Kaffeeauslass der Kaffeemaschine zugeführt. Danach führt die Mutter 9 wieder eine Aufwärtsbewegung entlang der Führung 8 aus und der Brühkolben 39 wird nach oben verschoben. Sobald die Übergangsstellen zwischen den Teilen 22, 23 und 24, 25 der Führungsnuten 20, 21 in den Bereich der Zapfen 27 und 28 gelangt sind, werden dieselben entlang der rechten seitlichen Teile 61, 62 der Führungsnuten 47, 48 nach oben verschoben. Dabei wird der Ausstosskolben 107 im Brühzylinder 82 nach oben bewegt und stösst den Kaffeekuchen nach oben. Der Ausstosszylinder 107 legt dabei infolge der beschriebenen Ausbildung des Antriebsorganes 26 den doppelten Weg als das Antriebsorgan 26 zurück, wobei das Antriebsorgan 26 denselben Weg parallel zur Achse des Führungsorganes 8 zurücklegt wie die Führungsarme 14 und 15. Dies ermöglicht eine geringere Bauhöhe der Kaffeemaschine. Wenn die Zapfen 27 und 28 die oberen rechten Eckpunkte der parallelogrammförmigen Führungsnuten 47 und 48 erreicht haben, erfolgt eine Verschwenkung des Brühzylinders 82 in die in Fig. 9 gezeigte Position, wobei der Kaffeekuchen (Trester) am unteren Rand der Führung 8 zurückgehalten und abgestreift wird und entlang des Ansatzes 106 der Abschlussplatte 105 nach unten in den Tresterbehälter fällt. Die inneren Teile 120 und 121 der Zapfen 27 und 28 haben dabei den Weg entlang der oberen Seiten 55 und 56 der Führungsnuten 47 und 48 zurückgelegt, wobei die äusseren Teile 118 und 119 der Zapfen 27 und 28 entlang der unteren Teile 24 und 25 der Führungsnuten 20 und 21 verschoben wurden. Die Ansätze 71 und 72 respektive 73 und 74 der federnden Nutenteile 67 und 68 respektive 69 und 70 verhindern ein Zurückfahren der Zapfen 27 und 28 in die falsche Richtung.

Die erfindungsgemässe Brühvorrichtung erlaubt eine leichte Reinigung derselben, so dass sie fest in die Kaffeemaschine eingebaut werden kann und im Zuge eines regelmässigen Service, beispielsweise nur alle 6 Monate, durch einen Monteur ausgebaut und gereinigt werden muss. Vorzugsweise wird in der Kaffeemaschine selbst eine Reinigungsvorrichtung eingebaut. Andererseits ist die erfindungsgemässe Brühvorrichtung derart aufgebaut, dass sie auch als herausnehmbarer Modul konzipiert werden könnte. Dabei könnte der Antriebsmotor beispielsweise fest mit der Brühvorrichtung zusammengebaut werden. In diesem Falle müsste der Motor jedoch abgedichtet werden.

Die Brühvorrichtung ist bezüglich einer zu den seitlichen Führungs- und Halteplatten (6, 7) parallelen Ebene symmetrisch aufgebaut, was mehrere Einbauvarianten ermöglicht.

## Patentansprüche

1. Brühvorrichtung, insbesondere für eine Kaffeemaschine, mit seitlichen Führungs- und Halteplatten (6, 7) mit Nuten (47, 48) zur Führung eines Brühzylinders (82) und zur Halterung von Einzelteilen der Brühvorrichtung (2), einem Brühkolben (39), einem Brühzylinder (82) mit einem Ausstosskolben (107), Zuführorganen (29, 31) zur Zuführung des Brühwassers zum Brühzylinder (82) und Abflussorganen (101, 102) für das zubereitete Getränk, gekennzeichnet durch ein konzentrisch zum Brühkolben (39) angeordnetes Führungsorgan (8) zur axialen Führung des Brühkolbens (39), ein konzentrisch zu diesem Führungsorgan (8) angeordnetes erstes Antriebsmittel (9) um den Brühkolben (39) in die gewünschte, bezüglich des Brühzylinders (82) variable Brühposition zu bringen, wobei das Antriebsmittel (9) mit Steuerelementen (14, 15) zur Steuerung der Schwenkbewegung des Brühzylinders (82) von einer Einfüllstellung in eine Brühstellung verbunden ist und ein bezüglich des Brühzylinders (82) bewegbares Antriebsorgan (26) zur Bewegung des Ausstosskolbens (107) im Brühzylinder (82) derart, dass der Ausstosskolben (107) bezüglich dem Antriebsorgan (26) einen übersetzten Weg zurücklegt.

2. Brühvorrichtung nach Patentanspruch 1, dadurch gekennzeichnet, dass das Führungsorgan (8) mindestens teilweise hohlzylinderförmig ausgebildet und mit einem Aussengewinde (93) versehen ist.

3. Brühvorrichtung nach Patentanspruch 1 oder 2, dadurch gekennzeichnet, dass das Antriebsmittel (9) als mit einem Innengewinde (122) versehene Mutter, die an ihrem äusseren Umfang eine Verzahnung (10) aufweist, ausgebildet ist.

4. Brühvorrichtung nach einem der vorangehenden Patentansprüche, dadurch gekennzeichnet, dass die Steuerelemente (14, 15) als seitlich des Führungsorgans (8) angeordnete, abgewinkelte Führungsarme ausgebildet und mit abgewinkelten Nuten (20, 21) versehen sind und in ihrem oberen Bereich eine Ausnehmung (37, 38) zum teilweisen Eingriff des Antriebsmittels (9) und erste Befestigungsmittel (113, 114) zum Eingriff in zweite Befestigungsmittel (40, 41) des Brühkolbens (39) aufweisen.

5. Brühvorrichtung nach einem der vorangehenden Patentansprüche, dadurch gekennzeichnet, dass der Brühkolben (39) mit zweiten Befestigungsmitteln (40, 41) zu seiner axialen Verschiebung im Führungsorgan (8) versehen ist.

6. Brühvorrichtung nach einem der vorangehenden Patentansprüche, dadurch gekennzeichnet, dass der Brühzylinder (82) auf seiner einen Seite mit Antriebs- und Befestigungsarmen (83, 84) zur schwenkbaren Halterung des Brühzylinders zwischen den seitlichen Führungs- und Halteplatten (6, 7) versehen ist, welche Arme (83, 84) mit dem Antriebsorgan (26) für den Ausstosskolben (107) zusammenwirken.

7. Brühvorrichtung nach einem der vorangehenden Patentansprüche, dadurch gekennzeichnet, dass das Antriebsorgan (26) zur Bewegung des Ausstosskolbens (107) im Brühzylinder (82) zwei Seitenplatten (45, 46) mit Zapfen (27, 28) aufweist, welche einerseits in die Führungsnuten (47, 48) in den Führungs- und Halteplatten (6, 7) und andererseits in die in den seitlichen Führungsarmen (14, 15) angeordneten Nuten (20, 21) eingreifen.

8. Brühvorrichtung nach einem der vorangehenden Patentansprüche, dadurch gekennzeichnet, dass das Antriebsorgan (26) zwei Halteplatten (43, 44) zur drehbaren Halterung von zwei Reihen übereinander angeordneter Ritzel (49, 50, 51, 52, 53, 54) umfasst, wobei jeweils die Ritzel einer Reihe in Eingriff miteinander stehen und die gegenüberliegenden Ritzel der beiden Reihen einen Abstand zueinander aufweisen.

9. Brühvorrichtung nach einem der vorangehenden Patentansprüche, dadurch gekennzeichnet, dass der Ausstosskolben (107) an seiner dem Brühkolben (39) abgewandten Seite mit einer Zahnstange (88) versehen ist.

10. Brühvorrichtung nach Patentanspruch 9, dadurch gekennzeichnet, dass die Zahnstange (88) des Ausstosskolbens (107) beidseitig mit Verzahnungen (89, 90) zum Eingriff mit den obersten Ritzel (49, 52) des Antriebsorganes (26) versehen ist.

11. Brühvorrichtung nach einem der vorangehenden Patentansprüche, dadurch gekennzeichnet, dass eine obere Abschlussplatte (105) des Brühzylinders (82) in Richtung des Brühkolbens (39) zu konvex gekrümmt ausgebildet und auf der einen Seite mit einem verlängerten Ansatz (106) versehen ist.

12. Brühvorrichtung nach einem der Patentansprüche 1 bis 6, dadurch gekennzeichnet, dass das Antriebsorgan (26) je zwei übereinanderliegende, durch Zahnriemen verbundene Ritzel umfasst, wobei die Zahnriemen in Eingriff mit Verzahnungen der Antriebsarme (83, 84) des Brühzylinders (82) stehen und die Zahnriemen an ihren einander zugewandten Seiten einen Zwischenraum bilden.

13. Brühvorrichtung nach einem der vorangehenden Patentansprüche, dadurch gekennzeichnet, dass die Nuten (47, 48) in den Führungs- und Halteplatten (6, 7) parallelogrammförmig ausgebildet sind.

14. Brühvorrichtung nach einem der vorangehenden Patentansprüche, dadurch gekennzeichnet, dass der Brühzylinder (82) mit einer Abdeckplatte (134) zum Schutz des Brühwasseranschlusses (29, 30, 31) vor Verschmutzung versehen ist.

15. Brühvorrichtung nach einem der vorangehenden Patentansprüche, dadurch gekennzeichnet, dass sie mit einem Zwischenbehälter (133) für das gemahlene Kaffeepulver versehen ist und ein mit dem Brühzylinder (82) verbundenes Abschlussmittel (132) für den Zwischenbehälter (133) vorhanden ist.

16. Brühvorrichtung nach einem der vorangehenden Patentansprüche, gekennzeichnet durch einen, ein Ventil enthaltenden Brühwasseranschluss (29) mit einem Zapfen zum Eingriff in einen Anschluss am Brühzylinder (82).

17. Kaffeemaschine mit einer Brühvorrichtung nach einem der vorangehenden Patentansprüche.

18. Kaffeemaschine mit einer Brühvorrichtung nach Patenanspruch 17, dadurch gekennzeichnet, dass sie ein durch einen Motor angetriebenes, parallel zur Längsachse der Brühvorrichtung (2) angeordnetes zweites Antriebsmittel (11) zum Zusammenwirken mit dem ersten Antriebsmittel (9) der Brühvorrichtung (2) aufweist.

19. Kaffeemaschine nach Patentanspruch 17 oder 18, dadurch gekennzeichnet, dass sie mit Mitteln (35, 36) zur Erfassung der Umdrehungen des ersten Antriebsmittels (9) der Brühvorrichtung und damit zur Bestimmung der Position des Brühkolbens (39) versehen ist.

20. Kaffeemaschine nach einem der Patentansprüche 17 bis 19, dadurch gekennzeichnet, dass sie mit einer Steuereinheit (143) zur Bestimmung der Mahlzeit eines Mahlwerks (144) entsprechend den durch Eingabeeinheiten (140, 141, 142) vorgewählten Daten versehen ist, wobei die Steuereinheit aufgrund des durch die Mittel (35, 36) erfassten Brühkolbenhubes einen Korrekturfaktor zur Steuerung des Mahlwerks berechnet.

## Claims

1. Brewing apparatus, especially for a coffee machine, with lateral guiding and holding plates (6, 7) including grooves (47, 48) for guiding a brewing cylinder (82) and for mounting individual components of the brewing apparatus (2), a brewing piston (39), a brewing cylinder (82) with an ejection piston (107), supply means (29, 31) for supply of scalding water to the brewing cylinder (82) and discharge means (101, 102) for the prepared beverage, characterized by a guide means (8) disposed concentrically with said brewing piston (39) for axial guidance of the brewing piston (39), a first drive means (9) disposed concentrically with the guide means (8) for bringing the brewing piston (39) into the desired brewing position, variable with respect to said brewing cylinder (82), the drive means (9) being connected to control elements (14, 15) for controlling the swivel movement of the brewing cylinder (82) from a filling position into a brewing position, and a driving mechanism (26) movable with respect to the brewing cylinder (82) for moving the ejection piston (107) in the brewing cylinder (82) in such a way that the ejection piston (107) travels a step-up path with respect to the driving mechanism (26).

2. The brewing apparatus of claim 1, wherein the guide means (8) is at least partially hollow-cylindrical and includes an external thread (93).

3. The brewing apparatus of claim 1 or 2, wherein the drive means (9) is a nut with an internal thread (122) which has teeth (10) on its outer periphery.

4. The brewing apparatus of one of the preceding claims, wherein the control elements (14, 15) are bent guide arms disposed laterally with respect to the guide means (8), and are provided with angled grooves (20, 21), and have a recess (37, 38) in their upper region for partial engagement of the drive means (9), and first securing means (113, 114) for engagement in second securing means (40, 41) of the brewing piston (39).

5. The brewing apparatus of one of the preceding claims, wherein the brewing piston (39) is provided with second securing means (40, 41) for axial displacement thereof in the guide means (8).

6. The brewing apparatus of one of the preceding claims, wherein the brewing cylinder (82) is provided on one side thereof with driving and securing arms (83, 84) for pivotingly mounting the brewing cylinder between the lateral guiding and holding plates (6, 7), said arms (83, 84) co-operating with the driving mechanism (26) for the ejection piston (107).

7. The brewing apparatus of one of the preceding claims, wherein for moving the ejection piston (107) in said brewing cylinder (82), the driving mechanism (26) has two sideplates (45, 46) with journals (27, 28) for engaging in the guide grooves (47, 48) in the guiding and holding plates (6, 7) on one side, and engaging the grooves (20, 21) in the lateral guide arms (14, 15) on the other side.

8. The brewing apparatus of one of the preceding claims wherein the driving mechanism (26) comprises two holding plates (43, 44) for rotatingly mounting two rows of superposed pinions (49, 50, 51, 52, 53, 54), the pinions of each row engaging one another, and the opposite pinions of the two rows being spaced from one another.

9. The brewing apparatus of one of the preceding claims wherein the ejection piston (107) is provided with a toothed rack (88) on the side thereof remote from the brewing piston (39).

10. The brewing apparatus of claim 9, wherein the toothed rack (88) of the ejection piston (107) is provided on both sides with teeth (89, 90) for engaging the uppermost pinions (49, 52) of the driving mechanism (26).

11. The brewing apparatus of one of the preceding claims wherein a top closure plate (105) of the brewing cylinder (82) is convexly curved toward the brewing piston (39) and includes an extension (106) on one side thereof.

12. The brewing apparatus of one of the claims 1 to 6, wherein the driving mechanism (26) comprises two pairs of superposed pinions connected by cogged V-belts, the cogged V-belts engaging the teeth of the driving arms (83, 84) of the brewing cylinder (82), and the cogged V-belts forming a gap at their sides facing each other.

13. The brewing apparatus of one of the preceding claims wherein the grooves (47, 48) in the guiding and holding plates (6, 7) are parallelogram-shaped.

14. The brewing apparatus of one of the preceding claims wherein the brewing cylinder (82) is provided with a cover plate (134) for protecting the scalding water connection (29, 30, 31) from soiling.

15. The brewing apparatus of one of the preceding claims wherein it comprises further an intermediate container (133) for ground coffee and closure means (132) connected to the brewing cylinder (82) for the intermediate container (133).

16. The brewing apparatus of one of the preceding claims further comprising a scalding water connection (29) having a valve and a plug for engaging in a fitting on the brewing cylinder (82).

17. A coffee machine having brewing apparatus according to one of the preceding claims.

18. The coffee machine having brewing apparatus according to claim 17, wherein it further comprises a motor-driven second drive means (11) disposed parallel to the longitudinal axis of the brewing apparatus (2) for cooperating with the first drive means (9) of the brewing apparatus (2).

19. The coffee machine according to claim 17 or 18, wherein detecting means (35, 36) are provided for detecting the revolutions of the first drive means (9) of the brewing apparatus and thus for determining the position of the brewing piston (39).

20. The coffee machine according to one of the claims 17 to 19, wherein a control unit (143) is provided for determining the grinding time of a grinder (144) as a function of data preselected by means of input units (140, 141, 142), said control unit calculating on the basis of the stroke of said brewing piston, detected by the detection means (35, 36), a correction factor for controlling said grinder.

## Revendications

1. Dispositif de préparation de boissons, en particulier pour une machine à café, avec plaques de guidage et de retenue latérales (6, 7), avec des rainures (47, 48) pour le guidage d'un cylindre d'infusion (82) et pour le support de différentes pièces du dispositif de préparation de boissons (2), un piston d'infusion (39), un cylindre d'infusion (82) avec un piston d'éjection (107), des organes d'alimentation (29, 31) pour l'alimentation de l'eau d'infusion au cylindre d'infusion (82) et des organes d'écoulement (101, 102) pour la boisson préparée caractérisés par un organe de guidage (8) disposé concentriquement par rapport au piston d'infusion (39) pour le guidage axial du piston d'infusion (39), un premier organe d'entraînement (9) disposé concentriquement à l'organe de guidage (8) pour amener le piston d'infusion (39) dans la position d'infusion souhaitée variable par rapport au cylindre d'infusion (82), l'organe d'entraînement (9) étant relié aux éléments de commande 14, 15 pour la commande du mouvement de basculement du cylindre d'infusion (82) d'une position de remplissage dans une position d'infusion et un organe d'entraînement (26) mobile par rapport au cylindre d'infusion (82) pour le déplacement du piston d'éjection (107) dans le cylindre d'infusion (82), de telle manière que le piston d'éjection (107) effectue une course démultipliée par rapport à l'organe d'entraînement (28).

2. Dispositif de préparation de boissons selon la revendication 1 du brevet, caractérisé en ce que l'organe de guidage (8) est constitué au minimum en partie sous une forme cylindrique creuse et est pourvu d'un filetage extérieur (93).

3. Dispositif de préparation de boissons selon la revendication 1 ou 2 du brevet, caractérisé en ce que le moyen d'entraînement (9) est constitué sous la forme d'un écrou pourvu d'un filetage intérieur (122) qui présente, sur sa périphérie extérieure, une denture (10).

4. Dispositif de préparation de boissons selon l'une des revendication précédente, caractérisé en ce que les éléments de commande (14, 15) sont constitués de bras de guidage coudés disposés latéralement à l'organe de guidage (8), sont pourvus de rainures coudées (20, 21) et présentent, dans leur domaine supérieur, un évidement (37, 38) pour l'engagement partiel du moyen d'entraînement (9) et des premiers moyens de fixation (113, 114) pour s'engager dans les seconds moyens de fixation (40, 41) du piston d'infusion (39).

5. Dispositif de préparation de boissons selon l'une des revendications précédentes du brevet, caractérisé en ce que le piston d'infusion (39) est pourvu de deux moyens de fixation (40, 41) pour son déplacement axial dans l'organe de guidage (8).

6. Dispositif de préparation de boisons selon l'une des revendications précédentes du brevet, caractérisé en ce que le cylindre d'infusion (82) est pourvu, sur une de ses faces, de bras d'entraînement et de fixation (83, 84) pour le support basculable du cylindre d'infusion entre les plaques de guidage et de retenue latérales (6, 7), lesquels bras (83, 84) sont combinés à l'organe d'entraînement (26) pour le piston d'éjection (107).

7. Dispositif de préparation de boissons selon l'une des revendications précédentes du brevet, caractérisé en ce que l'organe d'entraînement (26) du déplacement du piston d'éjection (107) dans le cylindre d'infusion (82) présente deux plaques latérales (45, 46) avec les tourillons (27, 28) qui, d'une part, s'engagent dans les rainures de guidage (47, 48) des plaques de guidage et de retenue (6, 7) et, d'autre part, dans les rainures (20, 21) disposées dans les bras latéraux de guidage (14, 15).

8. Dispositif de préparation de boissons selon l'une des revendications précédentes du brevet, caractérisé en ce que l'organe d'entraînement (26) comprend deux plaques de retenue (43, 44) pour supporter de façon pivotable deux rangées de pignons disposées l'une au-dessus de l'autre (49, 50, 51, 52, 53, 54), les pignons d'une rangée étant en prise entre eux et les pignons opposés des deux rangées présentant un écartement l'un par rapport à l'autre.

9. Dispositif de préparation de boissons selon l'une des revendications précédentes du brevet, caractérisé en ce que le piston d'éjection (107) est pourvu, sur sa face regardant le piston d'infusion (39) d'une crémaillère (88).

10. Dispositif de préparation de boissons selon la revendication 9 du brevet, caractérisé en ce que la crémaillère (88) du piston d'éjection (107) est pourvue des deux côtés de crémaillères (89, 90) s'engageant avec les pignons les plus hauts (49, 52) de l'organe d'entraînement (26).

11. Dispositif de préparation de boissons selon l'une des revendications précédentes du brevet, caractérisé en ce qu'une plaque de fermeture supérieure (105) du cylindre d'infusion (82) est constituée de façon courbe convexe dans la direction du piston d'infusion (39) et est pourvue, sur une face, d'un épaulement prolongé (106).

12. Dispositif d'infusion selon l'une des revendications 1 à 6 du brevet, caractérisé en ce que l'organe d'entraînement (26) comprend respectivement deux pignons superposés reliés par des courroies dentées, les courroies dentées étant en prise avec les dentures des bras d'entraînement (83, 84) du cylindre d'infusion (82) et constituant, sur leur face regardant, un espace intermédiaire.

13. Dispositif de préparation de boissons selon l'une des revendications précédentes du brevet, caractérisé en ce que les rainures (47, 48) sont constituées, dans les plaques de guidage et de retenue (6, 7), en forme de parallélogramme.

14. Dispositif de préparation de boissons selon l'une des revendications précédentes du brevet, caractérisé en ce que le cylindre d'infusion (82) est pourvu d'une plaque de recouvrement (134) pour la protection du raccord d'eau d'infusion (29, 30, 31) contre les saletés.

15. Dispositif de préparation de boissons selon l'une des revendications précédentes du brevet, caractérisé en ce qu'il est pourvu d'un réservoir intermédiaire (133) pour la poudre de café moulu et qu'un moyen de fermeture (132) relié au cylindre d'infusion (82) est prévu pour le réservoir intermédiaire (133).

16. Dispositif de préparation de boissons selon l'une des revendications précédentes du brevet, caractérisé par un raccord d'eau d'infusion (29) contenant une soupape avec un tourillon s'engageant dans un raccord sur le cylindre d'infusion (82).

17. Machine à café avec un dispositif d'infusion selon l'une des revendications précédentes du brevet.

18. Machine à café avec un dispositif d'infusion selon la revendication 17 du brevet, caractérisée en ce qu'elle présente un second moyen d'entraînement (11) disposé parallèlement à l'axe longitudinal du dispositif d'infusion (2) entraîné par un moteur agissant conjointement avec le premier moyen d'entraînement (9) du dispositif d'infusion (2).

19. Machine à café selon la revendication 17 ou 18 du brevet, caractérisée en ce qu'elle est pourvue des moyens (35, 36) de saisie des rotations du premier moyen d'entraînement (9) du dispositif d'infusion et, en conséquence, de détermination de la position du piston d'infusion (39).

20. Machine à café selon une des revendications 17 à 19 du brevet, caractérisée en ce qu'elle est pourvue d'une unité de commande (134) pour la détermination du temps de broyage d'un moulin (144) conformément aux données présélectionnées par les unités d'introduction (140, 141, 142), l'unité de commande calculant, sur la base de la course du piston d'infusion saisie par les moyens (34, 36), un facteur de correction pour la commande du moulin.
